# EUROPÄISCHE PATENTANMELDUNG

(11) **EP 2 620 680 A2**
(43) Veröffentlichungstag der Anmeldung: **31.07.2013**
(21) Anmeldenummer: 13151262.6
(22) Anmeldetag: 15.01.2013
(51) Int. Cl.: F16K 31/60

(54) **Pneumatisches Ventil mit Betätigungsknopf**

(30) Priorität: 26.01.2012 DE 102012100648
(71) Anmelder: Haldex Brake Products GmbH, 69123 Heidelberg (DE)
(72) Erfinder: Engel, Georg, 69181 Leimen (DE)
(74) Vertreter: Rehberg Hüppe + Partner

(57) **Zusammenfassung**

Die Erfindung betrifft ein pneumatisches Ventil (1) mit einem Ventilkörper (3), dessen Stellung manuell über einen Betätigungsknopf (8) veränderbar ist. Die Verbindung des Betätigungsknopfes (8) mit dem Ventilkörper (3) erfolgt über eine Rast- oder Sperrverbindung. Der Betätigungsknopf (8) ist zweiteilig gebildet mit einem Grundkörper (18) und einem Abdeckkörper (19), welcher für unterschiedliche Einsatzzwecke von Ventilen individualisiert sein kann, beispielsweise durch die Farbgebung, Formgebung und Aufdrucke mit Benutzungshinweisen. Der Abdeckkörper (19) kann auch ein Sicherungselement (36) ausbilden, mit welchem eine zusätzliche Sicherung der Rast- oder Sperrverbindung zwischen Betätigungsknopf (8) und Ventilkörper (3) erfolgt.

Die Erfindung findet Einsatz für ein beliebiges pneumatisches Ventil für ein Nutzfahrzeug, beispielsweise ein Park- oder Löseventil.

## Beschreibung

### TECHNISCHES GEBIET DER ERFINDUNG

Die Erfindung betrifft ein pneumatisches Ventil mit einer beliebigen Zahl von Stellungen und Anschlüssen. Das pneumatische Ventil findet bevorzugt Einsatz für eine Druckluftanlage eines Nutzfahrzeugs. Das pneumatische Ventil besitzt einen Ventilkörper, beispielsweise einen Ventilschieber, einen Ein- und/oder Auslassventilkörper oder einen Stößel, welcher einen Ventilschieber oder einen Ein- und/oder Auslassventilkörper betätigen kann. Die Stellung des Ventilkörpers kann manuell über einen Betätigungsknopf verändert werden. Um lediglich ein nicht beschränkendes Beispiel zu nennen, kann das pneumatische Ventil als Löseventil oder Parkventil für eine Anhängerbremsanlage ausgestaltet sein. Durchaus möglich ist, dass das Ventil neben der manuellen Betätigung zusätzlich auch pneumatisch, elektromagnetisch, durch eine Feder oder anderweitig betätigbar ist. Weitere Funktionen oder Bauelemente, beispielsweise eine Verriegelung mindestens einer Stellung des Ventils oder Ventilkörpers, eine Löseeinrichtung für eine Verriegelung, eine Steuereinheit o. ä., können ebenfalls in das Ventil integriert sein.

### STAND DER TECHNIK

Üblicherweise ist ein Betätigungsknopf für ein pneumatisches Ventil für eine manuelle Betätigung desselben über eine Schraube mit dem Ventilkörper verbunden. Hierzu verfügt der Ventilkörper auf der dem Betätigungsknopf zugewandten Stirnseite über eine Gewindebohrung, in welche eine eine Durchgangsbohrung des Betätigungsknopfs durchsetzende Schraube eingeschraubt wird, so dass der Betätigungsknopf zwischen dem Kopf der Schraube und der Stirnseite des Ventilkörpers verspannt werden kann.

Eine derartige Verbindung eines Betätigungsknopfs und eines Ventilkörper mittels einer Schraube wird beispielsweise bei Geräten des Unternehmens WABCO Fahrzeugsysteme GmbH mit den Warennummern 971 002 900 0 und 971 002 902 eingesetzt. Ein geeigneter Betätigungsknopf ist auch als Reparatursatz mit der Warennummer 971 002 924 2 erhältlich.

In DE 82 26 773 U1 ist ein Druckluftschaltventil offenbart, das einen manuell betätigbaren Druckknopf aufweist. Der Druckknopf ist mechanisch fest an einem Stift arretiert. Der Stift wiederum ist mit einem Stellkopf fest verbunden, der in einer Buchse angeordnet und koaxial zu dieser verschiebbar ist. Die Buchse ist hierbei am Gehäuse abgestützt. An seiner Stirnseite weist der Stellkopf eine konische Aussparung auf, in die eine Spitze einer Stange hineinragt. Indem die Stange mit ihrer Spitze durch eine die Stange beaufschlagende Feder in die Aussparung gepresst wird, wird eine ständige Kopplung des Stellkopfs mit der Stange erreicht. Die Stange steht (auf nicht näher spezifizierte Weise) in Wirkverbindung mit einem Ventilkörper des Druckluftschaltventils, der mit einer Bewegung der Stange von seinem Ventilsitz ausgelenkt werden kann. Die hierfür erforderliche Bewegung der Stange wird bei Betätigen des Druckschalters durch den Stellkopf auf die Stange übertragen. Die Bewegung des Stellkopfes relativ zu der Buchse ist dabei über eine Kulissenführung geführt. Dazu weist der Stellkopf an seinem Außenmantel eine Kulisse auf, in die eine Kugel eingreift. Die Kugel greift gleichzeitig in eine Nut auf dem Innenmantel der Buchse ein und wirkt somit als Führungselement zwischen der Buchse und dem Stellkopf, wobei die Verschiebung des Stellkopfs relativ zu der Buchse durch die Bewegung der Kugel entlang der Kulisse vorgegeben ist. Indem die Kulisse mit zwei stabilen Lagen für die Kugel ausgebildet ist, kann der Stellkopf zusätzlich in zwei Stellungen relativ zu der Buchse gesichert werden, die einer Durchlass- und einer Sperrstellung des Druckluftschaltventils entsprechen.

In DE 10 2008 051 205 A1 ist ein manuelles Bedienelement für eine Ventileinrichtung offenbart, mit dem eine Stellung eines Ventilschiebers veränderbar ist. Dazu ragt ein Zapfen, welcher in nicht näher spezifizierter Weise an dem manuellen Bedienelement befestigt ist, in eine Bohrung des Ventilschiebers hinein. Der Zapfen ist durch entsprechende Sprengringe in der Bohrung gegenüber einem Austritt gesichert. Der Zapfen ist damit relativ zu dem Ventilschieber in einem begrenzten Bereich frei verschiebbar und somit lose mit dem Ventilschieber verbunden. Um das Bedienelement in einer bestimmten Stellung gegenüber dem Gehäuse verrasten zu können, ist eine Rasteinrichtung vorgesehen. Die Rasteinrichtung ist mit einer Rastkugel gebildet, die sich über eine Feder an einem Gehäuse der Ventileinrichtung abstützt und die in eine Nut am Umfang des Zapfens einrasten kann, sodass der Zapfen in dieser Stellung relativ zu dem Gehäuse verrastet ist.

Ein manuelles Betätigungselement gemäß DE 10 2010 011 434 A1 ist mit einem Betätigungshebel ausgebildet, wobei eine Betätigung des Betätigungshebels über eine Nockenscheibe auf einen Ventilkörper übertragen wird. Wie die Nockenscheibe mit dem Betätigungshebel verbunden ist und wie die Kopplung der Nockenscheibe mit dem Ventilkörper gestaltet ist, ist nicht näher spezifiziert. Zur Verriegelung des Betätigungshebels gegenüber dem Gehäuse in verschiedenen Stellungen ist ein Rastelement vorgesehen, über das durch Druck- oder Federbeaufschlagung des Rastelements die Verriegelung erfolgen kann.

Weitere, nicht gattungsgemäße Druckschriften sind aus DE 20 2006 008 212 U1, DE 1 776 636 U, AT 307 487 B und DE 30 31 134 C2 bekannt.

### AUFGABE DER ERFINDUNG

Der Erfindung liegt die Aufgabe zugrunde, eine alternative Kopplungsmöglichkeit für die Kopplung eines Betätigungsknopfs mit einem Ventilkörper eines pneumatischen Ventils vorzuschlagen. Eine weitere der Erfindung zugrunde liegende Aufgabe betrifft die Gestaltung einer Gruppe pneumatischer Ventile mit Betätigungsknöpfen, welche unter Berücksichtigung des Aufwands für die Herstellung, die Bevorratung und die Bauelementvielfalt für unterschiedliche Einsatzzwecke individualisierbar sein sollen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht zunächst auf der Erkenntnis, dass die Befestigung des Betätigungsknopfes an dem Ventilkörper über die erläuterte Schraub- und Gewindeverbindung nicht zwingend erforderlich ist, sondern dass auch eine andere Befestigungs- oder Kopplungsmöglichkeit besteht, welche dennoch den Anforderungen im Betrieb genügen, beispielsweise den rauen Einsatzbedingungen eines Ventils mit Betätigungsknopf im Fahrbetrieb eines Nutzfahrzeugs, für welchen sich trotz der Vibrationen die Kopplung nicht lösen darf.

Andererseits haben der Erfindung zugrunde liegende Überlegungen dazu geführt, dass das Einschrauben einer Befestigungsschraube in die Stirnseite des Ventilkörpers Nachteile mit sich bringen kann:
Einerseits muss hierfür stirnseitig in den Ventilkörper eine Bohrung eingebracht werden mit anschließender Einbringung des Gewindes, was den Herstellungsaufwand für den Ventilkörper erhöht.

Andererseits ist der Ventilkörper im Bereich der Stirnseite infolge der Gewindebohrung lediglich hohlzylinderförmig ausgebildet, was eine Schwächung des Ventilkörpers in diesem Bereich darstellt. Da dieser Bereich gerade der Übertragung der Kräfte zwischen Betätigungsknopf und Ventilkörper dient, wirken in diesem Bereich aber besondere Beanspruchungen.

Von besonderer Bedeutung können diese Nachteile einer Kopplung über eine Befestigungsschraube beispielsweise sein, wenn für den Ventilkörper kein hochfestes Material oder Metall verwendet wird. Beispielsweise ist die Befestigung des Betätigungsknopfes über eine Befestigungsschraube nicht möglich, wenn der Ventilkörper aus Kunststoff besteht, da das in den Kunststoff eingeschnittene Gewinde versagen würde und/oder der außerhalb der Gewindebohrung verbleibende Kreisringquerschnitt des Ventilkörpers aus Kunststoff die Beanspruchungen nicht dauerhaft aushalten würde.

Erfindungsgemäß wird eine neue Art der Kopplung des Betätigungsknopfes mit dem Ventilkörper vorgeschlagen, indem erfindungsgemäß der Betätigungsknopf mit einem Grundkörper ausgestattet ist, der über eine Rast- oder Sperrverbindung mit dem Ventilkörper gekoppelt ist. Der Einsatz einer Rast- oder Sperrverbindung zur Kopplung des Ventilkörpers mit dem Betätigungsknopf ist beispielsweise vorteilhaft hinsichtlich der Montage (und Demontage) des Betätigungsknopfes mit (oder von) dem Ventilkörper. Ein Erzeugen eines Gewindes an dem Ventilkörper für die Kopplung kann sich erfindungsgemäß erübrigen, womit Materialschwächungen im Kraftfluss von dem Betätigungsknopf zu dem Ventilkörper vermieden oder verringert sind. Ohne dass dies zwingend der Fall sein muss, kann der Ventilkörper auch im Kopplungsbereich mit dem Betätigungsknopf auch als Vollkörper (ohne zentrische Gewindebohrung) ausgebildet sein.

Für die Ausgestaltung der erfindungsgemäßen Rast- oder Sperrverbindung gibt es vielfältige Lösungen. Gemäß einer bevorzugten Ausgestaltung der Erfindung verfügt die Rast- oder Sperrverbindung über mindestens ein radial elastisch verformbares Rast- oder Sperrelement. Dieses Rast- oder Sperrelement greift zur Bildung der Rast- oder Sperrverbindung in eine radiale Ausnehmung, beispielsweise eine Rast- oder Sperrnut, ein.

Im Rahmen der vorliegenden Erfindung wird unter einem Rastelement, welches für eine *Rastverbindung* in Wechselwirkung mit einer Rastnut tritt, insbesondere eine Verbindung verstanden, bei welcher das Rastelement elastisch verformt wird und angesichts einer elastischen Verformung in der Rastnut eingreift oder "einschnappt". Werden hinreichende Lösekräfte auf die Rastverbindung ausgeübt, führt dies, insbesondere durch Ein- und Ausführschrägen an dem Rastelement und/oder der Rastnut, zu einer elastischen Verformung des Rastelements mit einem Lösen der Rastverbindung, ohne dass es zu einer Beschädigung von Rastelement und/oder Rastnut kommt.

Hingegen wird im Rahmen der vorliegenden Erfindung unter einer Sperrverbindung insbesondere eine Kopplung oder Verbindung verstanden, bei welcher ein Sperrelement nach Eintritt in die radiale Ausnehmung oder Sperrnut, unter Umständen auf ähnliche Weise mit elastischer Verformung wie zuvor für das Rastelement beschrieben, auch bei Aufbringung von Lösekräften auf die derart gebildete Sperrverbindung nicht gelöst wird - vielmehr setzt das Lösen der Sperrverbindung die plastische Verformung oder Zerstörung des Sperrelements, eines das Sperrelement haltenden Rast- oder Sperrarms und/oder Ausnehmung oder Sperrnut oder zusätzliche Lösemaßnahmen voraus.

Wie bereits zuvor erläutert, kann eine Verbindung zwischen Rastelement und Ausnehmung durchaus durch elastische Verformung des Rastelements aufgelöst werden bei Aufbringung hinreichender Lösekräfte. Sind die Kontaktflächen zwischen Sperrelement und Ausnehmung quer zur Löserichtung orientiert, führt die Aufbringung von Lösekräften nicht zu einer radial elastischen Verformung des Sperrelements, so dass tatsächlich die Verbindung nicht ohne weiteres durch Aufbringung von Lösekräften gelöst werden kann. Der Unterschied, ob eine Rast- oder eine Sperrverbindung gebildet ist, kann somit in der Gestaltung der Anlageflächen zwischen Rast- oder Sperrelement und Ausnehmung bestehen.

Für die Anordnung des Rast- oder Sperrelements einerseits und die radiale Ausnehmung andererseits gibt es im Rahmen der vorliegenden Erfindung insbesondere zwei Alternativen: Durchaus möglich ist, dass das radial elastische verformbare Rast- oder Sperrelement von dem Ventilkörper ausgebildet oder an diesem gehalten ist. Beispielsweise kann der Ventilkörper stirnseitig mindestens ein radial nach innen elastisch verformbares Rast- oder Sperrelement aufweisen, welches beispielsweise abseits der Längsachse des Ventilkörpers über einen Rast-oder Sperrarm verfügt, an welchen endseitig eine Rast- oder Sperrnase angeformt ist. Die Rast-oder Sperrnase kann dann eine Rast- oder Sperrverbindung mit einer radialen Ausnehmung, beispielsweise einer Umfangsnut, des Betätigungsknopfes eine Rast- oder Sperrverbindung ausbilden.

Für eine erfindungsgemäße Alternative ist allerdings das Rast- oder Sperrelement von dem Grundkörper des Betätigungselements ausgebildet, beispielsweise mit einem sich axial erstreckenden Rast- oder Sperrarm sowie einer endseitigen Rast- oder Sperrnase, welche in eine Ausnehmung des Ventilkörpers eingreift, beispielsweise in eine in Umfangsrichtung umlaufende Rast- oder Sperrnut des Ventilkörpers. Dies hat den Vorteil, dass der Ventilkörper auch in dem Kopplungsbereich mit dem Betätigungsknopf als Vollkörper ausgebildet sein kann.

Eine erfindungsgemäße Ausgestaltung schlägt vor, dass ein Sicherungselement vorhanden ist, welches die Rast- oder Sperrverbindung zwischen Betätigungsknopf und Ventilkörper sichert oder verstärkt. Dies erfolgt dadurch, dass der Freiheitsgrad, welchen das Rast- oder Sperrelement für die radial elastische Verformung besitzt, durch das Sicherungselement blockiert wird. Folge dieser Blockade des Freiheitsgrads ist, dass die elastische Verformung des Rast-oder Sperrelements nur möglich ist, wenn das Sicherungselement beseitigt oder hinreichend verformt wird. Letztendlich verstärkt also das Sicherungselement die Kopplung zwischen Betätigungsknopf und Ventilkörper. Für den Fall, dass das Sicherungselement elastisch ausgebildet ist, kann durch elastische Blockade des Freiheitsgrads für die radial elastische Verformung des Rast- oder Sperrelements mittels des Sicherungselements die erforderliche Lösekraft erhöht werden. Besitzt hingegen das Sicherungselement eine Steifigkeit derart, dass dieses nicht durch Lösekräfte so verformbar ist, dass ein Raum für eine Bewegung oder Verformung des Rast- oder Sperrelement geschaffen werden kann in einem Ausmaß der Bewegung, dass die Rast- oder Sperrverbindung mit der Ausnehmung gelöst wird, ist mit dem Sicherungselement eine Sperrverbindung gebildet.

Für eine Positionssicherung des Sicherungselements gegenüber dem Rast- oder Sperrelement oder dem Grundkörper des Betätigungsknopfes gibt es vielfältige Möglichkeiten. Um lediglich einige nicht beschränkende Beispiele zu nennen, kann das Sicherungselement reibschlüssig oder mit einer Übergangs- oder Presspassung mit dem Rast- oder Sperrelement oder dem Grundkörper lagefixiert sein. Für einen besonderen Vorschlag der Erfindung findet zwischen Sicherungselement und Rast- oder Sperrelement oder Grundkörper eine (weitere) Rast- oder Sperrverbindung Einsatz, welche das Sicherungselement in seiner Sicherungsposition sichert.

Grundsätzlich möglich ist, dass das Sicherungselement im Inneren des Ventils, des Grundkörpers oder des Ventilkörpers angeordnet ist, wo das Sicherungselement dann unter Umständen von außen nicht sichtbar ist, sondern "im Verborgenen wirkt". Für eine weitere Ausgestaltung der Erfindung bildet das Sicherungselement zumindest eine Teilfläche der Stirnseite des Betätigungsknopfes aus. Somit kann das Sicherungselement beispielsweise auch zum Abdecken einer Ausnehmung des Betätigungsknopfes genutzt sein. Andererseits ist bei Ausbildung der Stirnfläche des Betätigungsknopfes mit dem Sicherungselement das Sicherungselement von außen frei zugänglich, was das Einsetzen des Sicherungselements in den Grundkörper oder Ventilkörper vereinfachen kann. Bei einer gewünschten Demontage des Betätigungsknopfes von dem Ventilkörper kann das Sicherungselement von außen mit einem Werkzeug oder von der Hand des Benutzers manipuliert und entfernt werden.

Während durchaus möglich ist, dass das Sicherungselement ausschließlich den zuvor genannten Zwecken dient, übernimmt dieses in weiterer Ausgestaltung der Erfindung eine weitere Funktion: Die von dem Sicherungselement gebildete Fläche oder Teilfläche der Stirnseite des Betätigungsknopfes kann für einen Einsatzzweck des Ventils individualisiert sein. Während unter Umständen in unterschiedlichen Ventilen derselbe Ventilkörper und/oder derselbe Grundkörper des Betätigungsknopfes Einsatz findet, wodurch die Bauteilvielfalt verringert ist, kann die Individualisierung des Ventils oder Betätigungsknopfes für unterschiedliche Einsatzzwecke über das Sicherungselement erfolgen. Um lediglich einige nicht beschränkende Beispiele zu nennen, kann für ein Löseventil einerseits und ein Parkventil andererseits derselbe Grundkörper des Betätigungsknopfes eingesetzt werden, während die von dem Sicherungselement gebildete Fläche oder Teilfläche der Stirnseite für das Löseventil rot ist und für das Parkventil schwarz ist. Durch die unterschiedlichen Farbgebungen der Fläche oder Teilfläche der Stirnseite kann dann durch den Benutzer zur Erhöhung der Bediensicherheit das Parkventil und das Löseventil einfach unterschieden werden. Ebenfalls möglich ist, dass die Individualisierung des Ventils an unterschiedliche Einsatzzwecke über die Geometrie, Oberflächengestaltung und Außenkontur des Sicherungselements im Bereich der Stirnseite des Betätigungsknopfes erfolgt. Um ein weiteres Beispiel zu nennen, kann die von dem Sicherungselement gebildete Fläche oder Teilfläche der Stirnseite des Betätigungsknopfes individualisiert sein durch unterschiedliche Bedienhinweise oder Schaltstellungssymbole für die unterschiedlichen Einsatzzwecke des Ventils, beispielsweise mit den Schaltstellungen des Löseventils einerseits und denen des Parkventils andererseits.

Während grundsätzlich möglich ist, dass der Betätigungsknopf ausschließlich der Übertragung von Betätigungskräften auf den Ventilkörper dient, kann der Betätigungsknopf auch weitere Funktionen erfüllen. In einer besonderen Ausgestaltung des erfindungsgemäßen Ventils ist zwischen Betätigungsknopf und Ventilkörper eine Hülse gefangen, so dass der Betätigungsknopf auch für eine axiale Sicherung der Hülse genutzt wird. Die Hülse besitzt einen Führungsschlitz, in welchen ein an einem Gehäuse, beispielsweise in einer radialen Bohrung desselben, geführtes Führungselement, insbesondere ein Führungsstift, eingreift. Ist die Hülse gegenüber dem Ventilkörper verdrehgesichert, kann über die Wirkverbindung zwischen Führungselement und Führungsschlitz eine Verdrehsicherung des Betätigungsknopfes gegenüber dem Ventilkörper erfolgen. Ist der Führungsschlitz zumindest in Teilbereichen gegenüber einer axialen Orientierung geneigt, kann (ähnlich einem Spindeltrieb) eine axiale Bewegung des Betätigungsknopfes umgewandelt werden in eine Drehbewegung des Ventilkörpers.

Eine andere oder zusätzliche Funktion kann die Wirkverbindung zwischen Führungselement und Führungsschlitz übernehmen, wenn der Führungsschlitz mindestens eine Verengung besitzt. Ist der Führungsschlitz und/oder ist das Führungselement elastisch ausgebildet, kann der Führungsschlitz lediglich die Verengung passieren, wenn erhöhte Betätigungskräfte auf den Betätigungsknopf aufgebracht werden. Somit kann über die Verengung einerseits eine Lagefixierung einer einmal eingenommenen Stellung des Ventilkörpers und des Betätigungsknopfes erfolgen, beispielsweise auch bei Vibrationen im Fahrbetrieb eines Nutzfahrzeugs, welches mit einem erfindungsgemäßen Ventil ausgestattet ist. Weiterhin kann über die mindestens eine Verengung eine haptische Rückmeldung an den Benutzer bei der Betätigung des Betätigungsknopfes gegeben werden, wenn der Ventilkörper charakteristische Schaltstellungen überfährt oder verlässt. Es versteht sich, dass der Führungsschlitz auch mit Erweiterungen ausgebildet sein kann, so dass zwischen Gehäuse und Führungselement einerseits und Ventilkörper und/oder Betätigungsknopf andererseits ein gewisses Umfangsspiel vorhanden und vorgegeben ist.

Für einen anderen Vorschlag der Erfindung besitzt der Ventilkörper eine Betätigungskraftkontur. Der Abstand der Betätigungskraftkontur von einer Längsachse des Ventilkörpers ist nicht konstant, sondern verändert sich. An der Betätigungskraftkontur gleitet ein radial elastisch beaufschlagtes Gleitelement während der manuellen Betätigung des Betätigungsknopfes. Je nach Abstand der Kontaktfläche des Gleitelements mit der Betätigungskraftkontur von der Längsachse des Ventilkörpers ändert sich die Reibkraft zwischen Gleitelement und Ventilkörper, so dass hierüber auch eine Positionssicherung einer einmal eingenommenen Schaltstellung des Ventilkörpers möglich ist und/oder eine haptische Rückmeldung an den Benutzer gegeben werden kann.

Grundsätzlich möglich ist der Einsatz mindestens eines beliebigen Dichtelements in dem Ventil und/oder der Einsatz mindestens eines beliebigen Federelements für die elastische Abstützung des Gleitelements oder des Verdrehsicherungselements. Für eine besondere Ausgestaltung der Erfindung ist ein multifunktionales Dichtelement eingesetzt. Dieses nimmt einerseits eine Abdichtung des Betätigungsknopfes gegenüber dem Gehäuse vor. Auf diese Weise kann vermieden werden, dass beispielsweise Verunreinigungen oder Wasser über einen Zwischenraum zwischen Betätigungsknopf und Gehäuse in das Innere des Gehäuses eintreten kann/können, wo beispielsweise Verschmutzungen die Bewegung des Ventilkörpers erschweren oder blockieren können. Andererseits beaufschlagt das Dichtelement auch das Gleitelement oder Verdrehsicherungselement radial elastisch.

Grundsätzlich möglich ist, dass das Rast- oder Sperrelement, beispielsweise mit einer Rast-oder Sperrnase, infolge der radial elastischen Beaufschlagung an einem Boden der Ausnehmung oder Rast- oder Sperrnut anliegt. Dies birgt allerdings die Gefahr in sich, dass in axialer Richtung zwischen Ausnehmung und Rast- oder Sperrelement ein Spiel vorhanden ist, welches sich in einem "Schlackern" des Betätigungsknopfes gegenüber dem Ventilkörper äußern könnte. Die Erfindung schlägt für eine weitere Ausgestaltung vor, dass das Rast- oder Sperrelement mit einem axialen Übermaß in der Ausnehmung angeordnet ist. Als Folge dieses axialen Übermaßes liegt das Rast- oder Sperrelement in Betätigungsrichtung spielfrei an entsprechenden Abstützflächen der Ausnehmung an, was bedeuten kann, dass das Rast- oder Sperrelement nicht zwingend an dem Boden der Ausnehmung anliegt. Auf diese Weise kann eine spielfreie Kopplung zwischen Betätigungsknopf und Ventilkörper gewährleistet werden. Grundsätzlich können die Bauelemente des Ventils ein- oder mehrstückig hergestellt sein und aus einem beliebigen Material, mehreren Materialien oder Verbundkörpern gefertigt sein. Für einen besonderen Vorschlag der Erfindung ist oder sind der Betätigungsknopf, der Grundkörper, der Abdeckkörper und/oder der Ventilkörper aus Kunststoff hergestellt, wobei auch, beispielsweise für den Ventilkörper, ein faserverstärkter Kunststoff eingesetzt sein kann. Unter Umständen ermöglicht erst die erfindungsgemäße Ausgestaltung mit der Rast- oder Sperrverbindung zwischen Betätigungsknopf und Ventilkörper den Einsatz von Kunststoff für die genannten Bauelemente.

Ein anderer Aspekt der Erfindung widmet sich der Individualisierung mehrerer Betätigungsknöpfe für unterschiedliche Einsatzzwecke: Dieser Aspekt der Erfindung betrifft eine Gruppe pneumatischer Ventile, welche jeweils einen Ventilkörper besitzen, dessen Stellung manuell über einen zugeordneten Betätigungsknopf veränderbar ist. Hierbei ist die Gruppe pneumatischer Ventile gebildet mit einer ersten Teilgruppe von Ventilen, bei welchen der Betätigungsknopf für einen ersten Einsatzzweck individualisiert ist, beispielsweise durch eine Farbgebung, eine Formgebung und/oder Bedienhinweisen auf dem Betätigungsknopf. Des Weiteren beinhaltet die Gruppe pneumatischer Ventile eine zweite Teilgruppe von Ventilen, bei denen der Betätigungsknopf für einen zweiten Einsatzzweck individualisiert ist. Für die genannten Ausführungsbeispiele der Individualisierung bedeutet dies, dass die Betätigungsknöpfe der zweiten Teilgruppe eine andere Farbe, Form oder andere Bedienhinweise besitzen als die Betätigungsknöpfe der ersten Teilgruppe. Erfindungsgemäß sind die Betätigungsknöpfe der beiden Teilgruppen jeweils mit einem Grundkörper und einem Abdeckkörper ausgebildet. Hierbei finden für die Betätigungsknöpfe beider Teilgruppen gleicher Grundköper Einsatz. Allerdings besitzen die Betätigungsknöpfe der unterschiedlichen Teilgruppen unterschiedliche Abdeckkörper, die die Individualisierung der Betätigungsknöpfe an die jeweiligen Einsatzzwecke gewährleisten. Damit ist für die Betätigungsknöpfe beider Teilgruppen ein einziger Typ von Grundkörpern herzustellen und auf Lager zu halten, wodurch der Herstellungsaufwand und der Lagerhaltungsaufwand minimiert ist. Je nach dem, für welche Teilgruppe dann der Grundkörper eingesetzt werden soll, findet dann dieser Einsatz in Verbindung mit dem für den ersten Einsatzzweck individualisierten Abdeckkörper oder dem für den zweiten Einsatzzweck individualisierten Abdeckkörper.

(Durchaus möglich ist, dass auch weitere Bauelemente der Ventile der beiden Teilgruppen oder sogar auch alle Bauelemente des Ventils bis auf den Grundkörper des Betätigungsknopfes und den Endbereich des Ventilkörpers, welcher die Rast- oder Sperrverbindung ausbildet, unterschiedlich ausgebildet sind - vorzugsweise unterscheiden sich die Ventile der ersten und zweiten Teilgruppe aber nur durch die unterschiedlichen individualisierten Abdeckkörper.)

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Rast- oder Sperrelement die Rede ist, ist dies so zu verstehen, dass genau ein Rast- oder Sperrelement, zwei Rast- oder Sperrelemente oder mehr Rast- oder Sperrelemente vorhanden sind.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Teillängsschnitt durch ein erfindungsgemäßes pneumatisches Ventil mit dem Verbindungs- oder Kopplungsbereich zwischen Ventilkörper und Betätigungsknopf.
- **Fig. 2**: zeigt ein Detail II des Ventils gemäß Fig. 1.
- **Fig. 3**: zeigt in räumlicher Darstellung eine Hülse, welche zwischen dem Betätigungsknopf und dem Ventilkörper in dem Ventil gemäß Fig. 1 gefangen ist.
- **Fig. 4**: zeigt eine Ansicht eines Grundkörpers des Betätigungsknopfes des Ventils gemäß Fig. 1 bei Blickrichtung von rechts in Fig. 1.
- **Fig. 5**: zeigt einen Teillängsschnitt durch ein weiteres erfindungsgemäßes pneumatisches Ventil mit dem Verbindungs- oder Kopplungsbereich zwischen Ventilkörper und Betätigungsknopf.

### FIGURENBESCHREIBUNG

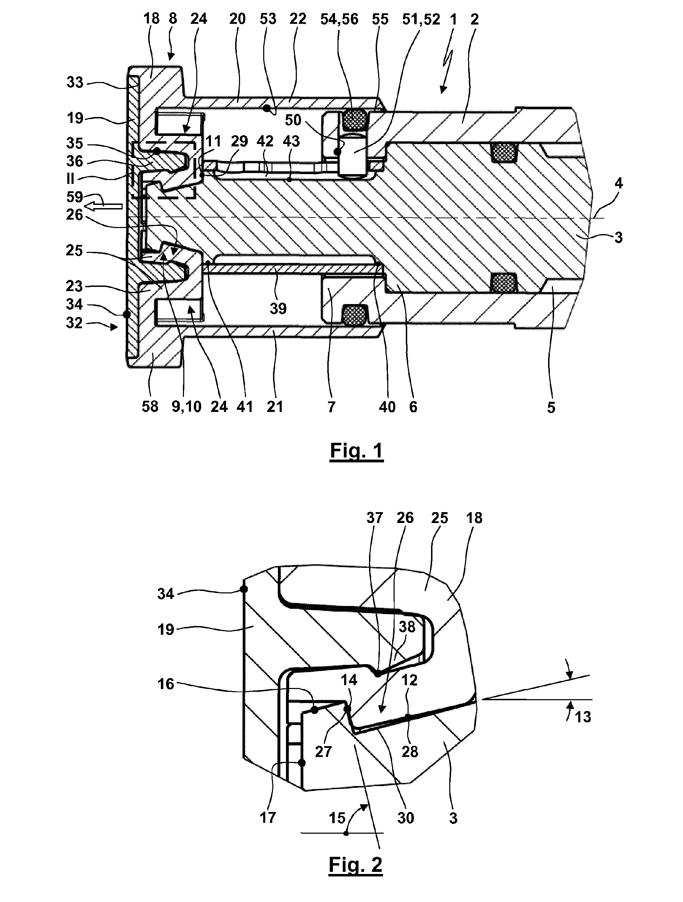

**Fig. 1** zeigt in einem Teillängsschnitt ein pneumatisches Ventil 1 mit einem Gehäuse 2, in welchem ein Ventilkörper 3 in Richtung einer Längs- oder Betätigungsachse 4 verschieblich geführt ist. Der Ventilkörper kann unmittelbar als Steuerschieber ausgebildet sein, wozu der Ventilkörper 3 mit Steuernuten 5 ausgestattet sein kann, welche je nach Schaltstellungen des Ventilkörpers 3 entlang der Betätigungsachse 4 unterschiedliche Anschlüsse des Gehäuses 2 miteinander verbinden und/oder absperren. Möglich ist aber auch, dass der Ventilkörper 3 unmittelbarer Bestandteil eines Sitzventilkörpers ist. Ebenfalls möglich ist, dass der Ventilkörper 3 einen Stößel bildet, welcher andere Ventilelemente betätigt.

Für die Schaltstellung gemäß Fig. 1 liegt ein Absatz 6 des Ventilskörpers 3 an einem radial nach innen eingezogenen Bund 7 des Gehäuses 2 an, womit eine Endstellung des Ventilkörpers 3 vorgegeben ist, für welche der Ventilkörper 3 maximal aus dem Gehäuse 2 heraustritt. Aus dieser Endstellung kann der Ventilkörper 3 durch Aufbringung von Betätigungskräften entlang der Betätigungsachse 4 auf einen Betätigungsknopf 8 in Fig. 1 nach rechts verschoben werden.

Zur Kopplung des Ventilkörpers 3 mit dem Betätigungsknopf 8 besitzt der Ventilkörper 3 in dem aus dem Gehäuse 2 auskragenden Endbereich eine radiale Ausnehmung 9, welche hier als umlaufende Rast- oder Sperrnut 10 ausgebildet ist. Die Rast- oder Sperrnut 10 ist auf der dem Gehäuse 2 zugewandten Seite begrenzt durch eine kreisringförmige Querfläche 11 des Ventilkörpers 3. Der Querfläche 11 ist ein Boden 12 der Rast- oder Sperrnut 10 vorgeordnet, der kegelstumpfförmig ausgebildet ist mit einem Öffnungswinkel 13. Auf der der Querfläche 11 gegenüberliegenden Seite ist die Rast- oder Sperrnut 10 begrenzt durch eine ebenfalls kegelstumpfförmige Abstützfläche 14 mit einem Öffnungswinkel 15, womit die Rast- oder Sperrnut 10 ihre axiale Erstreckung zwischen der Querfläche 11 und der Abstützfläche 14 radial nach außen vergrößert. Vorzugsweise beträgt der Öffnungswinkel 13 20° ± 5°, während der Öffnungswinkel 15 80° ± 10° betragen kann. Die Öffnungswinkel 13, 15 sind entgegengesetzt zueinander orientiert. Von der Abstützfläche 14 geht der Ventilkörper 3 über eine kegelstumpfförmige Einführschräge 16 über in eine quer zur Betätigungsachse 4 orientierte Stirnfläche 17.

Der Betätigungsknopf 8 ist zweiteilig ausgebildet mit einem Grundkörper 18 und einem Abdeckkörper 19. Der Grundkörper 18 ist in dem in Fig. 1 dargestellten Längsschnitt in erster Näherung U-förmig ausgebildet mit zwei parallelen Seitenschenkeln 20, 21, welche parallel zur Betätigungsachse 4 orientiert sind und einen hohlzylindrischen Hülsenbereich 22 bilden. Ein Grundschenkel 23 des U ist quer zur Betätigungsachse 4 orientiert. Von dem Grundschenkel 23 kragen einstückig von diesem ausgebildete Rast- oder Sperrelemente 24 aus. Die Rast- oder Sperrelemente 24 sind jeweils mit einem von dem Grundschenkel 23 ausgehenden Rast- oder Sperrarm 25 sowie einer hieran gehaltenen Rast- oder Sperrnase 26 gebildet. Die Rast- oder Sperrnase 26 greift formschlüssig ein in die Rast- oder Sperrnut 10, wobei in dieser Eingriffstellung die Rast- oder Sperrnase 26 über die Elastizität des Rast- oder Sperrarms 25 gehalten ist, wobei in dieser Eingriffsstellung auch eine Vorspannung des Rast- oder Sperrarms 25 vorhanden sein kann, so dass die Rast- oder Sperrnase 26 in die Rast- oder Sperrnut 10 radial nach innen eingepresst wird. Die Rast- oder Sperrnase 26 verfügt über eine Abstützfläche 27, welche an der Abstützfläche 14 anliegt und ebenfalls kegelstumpfartig ausgebildet ist mit dem Öffnungswinkel 15. Des Weiteren verfügt die Rast- oder Sperrnase 26 über eine kegelstumpfartige Abstützfläche 28, welche ungefähr unter dem Öffnungswinkel 13 gegenüber der Betätigungsachse 4 geneigt ist und somit ungefähr parallel zu dem Boden 12 orientiert ist (vgl. **Fig. 2****).** Schließlich verfügt die Rast- oder Sperrnase 26 über eine stirnseitige ringförmige Querfläche 29, welche an der Querfläche 11 anliegt. Die Rast- oder Sperrnase 26 ist mit der Abstützfläche 27 einerseits und der Querfläche 29 zwischen der Querfläche 11 und der Abstützfläche 14 spielfrei aufgenommen und gefangen. Zur Vermeidung einer Doppelpassung und eines etwaigen Spiels in Richtung der Betätigungsachse 4 bildet sich somit zwischen dem Boden 12 der Rast- oder Sperrnut 10 und der Abstützfläche 28 ein Spalt 30 aus. Anders gesagt besitzt der Abstand der Abstützfläche 27 von der Querfläche 29 der Rast- oder Sperrnase 26 ein axiales Übermaß gegenüber der Abstützfläche 14 und der Querfläche 11 des Ventilkörpers 3.

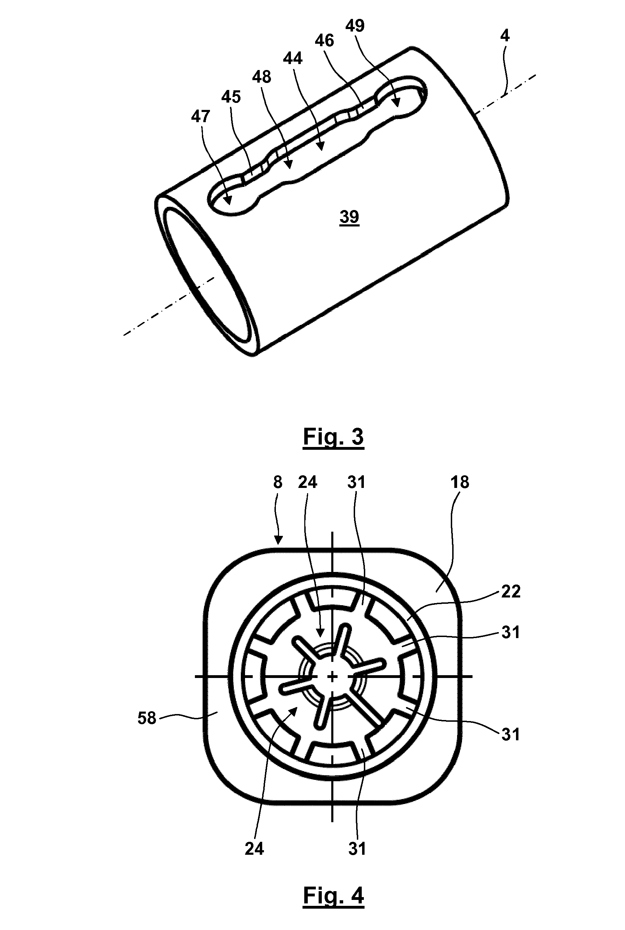

In **Fig. 4** ist zu erkennen, dass sechs Rast- oder Sperrelemente 24 in Umfangsrichtung um die Betätigungsachse 4 verteilt an dem Grundschenkel 23 des Grundkörpers 18 gehalten sind, die dann jeweils mit der umlaufenden Rast- oder Sperrnut 10 des Ventilkörpers 3 zusammenwirken. Des Weiteren ist zu erkennen, dass die Rast- oder Sperrelemente 24 für eine steife Abstützung und damit Stärkung der Rast- oder Sperrverbindung über radial orientierte Stege 31 an den Seitenschenkeln 20, 21, also dem Hülsenbereich 22, abgestützt sind.

Auch ohne den Abdeckkörper 19 bildet der Grundkörper 18 bereits eine Rastverbindung mit dem Ventilkörper aus. Für die Montage wird der Grundkörper 18 bei koaxialer Ausrichtung in Richtung der Betätigungsachse 4 an den Ventilkörper 3 angenähert. Die Abstützfläche 28 kommt dann zur Anlage an die Einführschräge 16. Mit Aufbringung von Montagekräften, welche in Richtung der Betätigungsachse 4 orientiert sind, gleitet die Abstützfläche 28 entlang der Einführschräge 16, womit unter elastischer Beaufschlagung des Rast- oder Sperrarms 25 die Rast- oder Sperrnase 26 radial nach außen gedrückt wird. Ist die montierte Stellung gemäß Fig. 1 erreicht, rastet die Rast- oder Sperrnase 26 in die Rast- oder Sperrnut 10.

Der Grundkörper 18 des Betätigungsknopfes 8 besitzt im Bereich seiner Stirnseite 32 eine beispielsweise zylindrische Ausnehmung 33, in welche der Abdeckkörper 19 eingesetzt ist. Der Abdeckkörper 19 kann an dem Grundkörper 18 durch beliebige Maßnahmen, beispielsweise durch Einpressen, Verkleben u. ä., gehalten sein. Der Abdeckkörper 19 bildet eine Teilfläche 34 der Stirnseite 32 aus. Beispielsweise kann durch eine Farbgebung der Teilfläche 34 eine Individualisierung des Betätigungsknopfes für die jeweilige Bauart des Ventils 1, einen Einsatzzweck des Ventils u. ä. erfolgen. Ebenfalls möglich ist, dass die Teilfläche 34 mit Hinweisen für die Benutzung des Ventils 1 oder die Funktion und Betätigung des Betätigungsknopfes 8 versehen ist.

Für das in Fig. 1 dargestellte Ausführungsbeispiel erfüllt der Abdeckkörper eine weitere Funktion, nämlich die einer Sicherung der Rastverbindung zwischen Rast- oder Sperrelement 24 und Rast- oder Sperrnut 10:

Der Grundkörper 18 verfügt über Ausnehmungen 35, welche die Rast- oder Sperrarme 25 begrenzen und Verformungswege für die elastische Beaufschlagung der Rast- oder Sperrelemente 24 bilden. Der Abdeckkörper 19 bildet Sicherungselemente 36 aus, welche mit der Montage des Abdeckkörpers 19 mit dem Grundkörper 18 in die Ausnehmungen 35 eintreten und diese teilweise oder vollständig ausfüllen, so dass Verformungswege für die Rast- oder Sperrelemente 24 verringert, behindert oder gänzlich beseitigt sind. Für das dargestellte Ausführungsbeispiel sind die Ausnehmungen 35 ebenfalls mit einer Rast- oder Sperrnut 37 ausgestattet, in welche eine Rast- oder Sperrnase 38 des Sicherungselements 36 eingreift, um das Sicherungselement 36 und damit auch den gesamten Abdeckkörper 19 in der montierten Stellung gemäß Fig. 1 zu sichern. Somit sind zwei Rast- oder Sperrverbindungen vorhanden, nämlich eine erste Rast- oder Sperrverbindung zwischen dem Rast - oder Sperrelement 24 des Grundkörpers 18 und der Ausnehmung 9 oder Rast- und Sperrnut 10 des Ventilkörper 3 sowie eine zweite Rast- oder Sperrverbindung zwischen Rast - oder Sperrelement 24 des Grundkörpers 18 und dem Sicherungselement 36. Diese beiden Rastverbindungen sichern gemeinsam den Grundkörper 18 in seiner montierten Stellung gegenüber dem Ventilkörper 3.

Durch die Gestaltung des Öffnungswinkels 13 der Abstützfläche 28 und der Einführschräge 16 können konstruktiv die Montagekräfte vorgegeben werden. Für eine Demontage werden die Demontagekräfte (und eine Sicherungswirkung gegen eine unbeabsichtigte Demontage beispielsweise infolge von Vibrationen) vorgegeben durch den Öffnungswinkel 15 der Abstützflächen 14, 27: Beträgt der Öffnungswinkel 15 90°, ist eine Demontage ohne Weiteres nicht möglich - mit einer Verkleinerung des Öffnungswinkels 15 ausgehend von 90° können ziehende Lösekräfte in Richtung der Betätigungsachse 4 auf den Grundkörper 18 dazu führen, dass die Rastverbindung gelöst wird, wobei mit einer Verkleinerung des Öffnungswinkels 15 die erforderlichen Lösekräfte kleiner werden, aber der Weg für die Montage u. U. größer wird.

Optional kann in dem Ventil 1 eine Hülse 39 verwendet sein, welche sich in ihren beiden Endbereichen an zylindrischen Mantelflächen 40, 41 des Ventilkörpers 3 abstützt. Zwischen den Mantelflächen 40, 41 verfügt der Ventilkörper über eine sich in axialer Richtung erstreckende Langnut 42 oder eine zylindrische Verjüngung, wobei der Boden der Langnut 42 oder die Mantelfläche der Verjüngung eine Gleitkontur 43 ausbildet, welche für das Ausführungsbeispiel gemäß Fig. 1 geradlinig mit konstantem radialem Abstand von der Betätigungsachse 4 ausgebildet ist. Die Hülse 39 verfügt über einen Führungsschlitz 44, der in Fig. 3 zu erkennen ist und Verengungen 45, 46 besitzt. Die Verengung 45 trennt einen Bereich des Führungsschlitzes 44 für eine endseitige erste Schaltstellung 47 von einem Überführungsbereich 48 des Führungsschlitzes 44, während die Verengung 46 den Überführungsbereich 48 von einer zweiten Schaltstellung 49 im anderen Endbereich des Führungsschlitzes 44 trennt. Die erste Schaltstellung 47 korrespondiert mit einem ersten Betriebszustand des Ventils 1, während die zweite Schaltstellung 49 mit einem anderen Betriebszustand des Ventils 1 korreliert. Im Überführungsbereich 48 erfolgt der Wechsel zwischen den Schaltstellungen 47, 49. Ist beispielsweise das Ventil 1 als Schieberventil ausgebildet, kann in dem Überführungsbereich 48 eine Steuerkante einen Anschluss oder Steuerraum überfahren.

In einer radial orientierten Durchgangsbohrung 50 in einem Endbereich des Gehäuses 2 ist gleitend ein Führungselement 51, hier ein Führungsstift 52, geführt. In jeder Betätigungsstellung des Ventils 1 überdeckt der Hülsenbereich 22 des Grundkörpers 18 des Betätigungsknopfes 8 die Durchgangsbohrung 50. Zwischen dem Führungsstift 52 und der innenliegenden Mantelfläche 53 des Hülsenbereichs 22 ist ein Dichtelement 54 verspannt, welches für das dargestellte Ausführungsbeispiel als O-Ring ausgebildet ist. Das Dichtelement 54 verhindert einerseits, dass bei Bewegungen und veränderten Stellungen des Betätigungsknopfes 8 Schmutz oder Wasser über einen Spalt 55 zwischen Gehäuse 2 und dem Hülsenbereich 22 in das Innere des Ventils 1 eintreten kann. Andererseits dient das Dichtelement 54 gleichzeitig als Federelement 56, welches den Führungsstift 52 elastisch radial nach innen beaufschlagt. Der Führungsstift 52 erstreckt sich durch den Führungsschlitz 44 der Hülse 39 hindurch und wird angesichts seiner elastischen Beaufschlagung durch das Federelement 56 mit seiner Stirnseite an die Gleitkontur 43 gepresst. Wird mit Betätigung des Betätigungsknopfes 8 der Ventilkörper 3 mit der daran gehaltenen Hülse 39 relativ zu dem Gehäuse 2 bewegt, gleitet der Führungsstift 54 entlang der Gleitkontur 43 und entlang des Führungsschlitzes 44. Während der Führungsstift 52 mit einem geringen Spiel in Umfangsrichtung in dem Führungsschlitz 44 im Bereich der ersten Schaltstellung 47, dem Überführungsbereich 48 und im Bereich der zweiten Schaltstellung 49 geführt ist, kann sich der Führungsstift 52 lediglich unter elastischer Verformung des Führungsstifts 52 und/oder unter Aufweitung der Verengungen 45, 46 im Bereich der Verengungen 45 bewegen, womit dem Benutzer bei der Betätigung des Betätigungsknopfes 8 eine haptische Rückmeldung gegeben wird.

Die Hülse 39 stützt sich mit einer Stirnseite an einem Absatz des Ventilkörpers 3 ab, während die andere Stirnseite an einer innenliegenden Stirnseite des Grundkörpers 18 abgestützt ist. Für den Fall, dass der Führungsstift 52 in einer Langnut 42 des Ventilkörpers 3 geführt ist, kann über den Führungsstift 52 ergänzend eine Verdrehsicherung des Ventilkörpers 3 erfolgen. Ebenfalls möglich ist, dass die Hülse 39 verdrehgesichert gegenüber dem Ventilkörper 3 gehalten ist, so dass dann unter Zwischenschaltung der Hülse 39 die Verdrehsicherung erfolgt. Möglich ist aber auch, dass bei Eintritt des Führungsstifts 52 in eine umlaufende Verjüngung des Ventilkörpers 3 der Betätigungsknopf 8 mit Hülse 39 und Ventilkörper 3 gegenüber dem Gehäuse 2 drehbar ist.

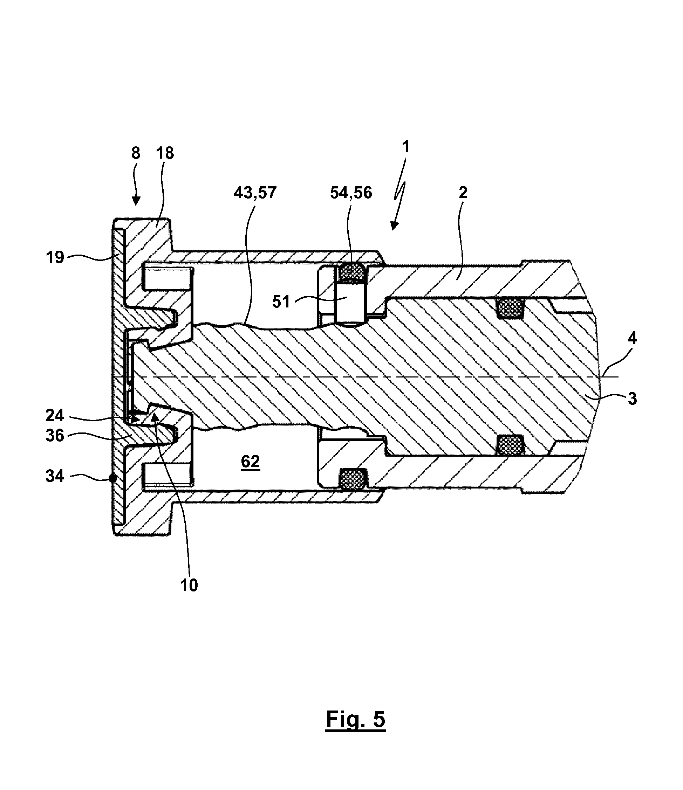

**Fig. 5** zeigt eine alternative Ausgestaltung der Erfindung, bei welcher keine Hülse 39 eingesetzt ist. Auch hier stützt sich die radial innenliegende Stirnseite des Führungsstifts 52 an einer Gleitkontur 43 ab. Allerdings bildet hier die Gleitkontur 43 eine Betätigungskraftkontur 57, deren Abstand von der Längs- oder Betätigungsachse 4 sich ändert, so dass mit der Betätigung des Betätigungsknopfes 8 des Ventilkörpers 3 der Führungsstift 52 in radialer Richtung bewegt wird unter Veränderung der Beaufschlagung des Federelements 56 erfolgt, wodurch eine Variation der Reibkraft zwischen Führungsstift 52 und Betätigungskraftkontur 57 erfolgt. Auf diese Weise kann dem Benutzer die haptische Rückmeldung bei der Betätigung des Betätigungsknopfes 8 gegeben werden und/oder eine Sicherung einer Position des Ventilkörpers 3 entlang der Betätigungsachse erfolgen.

In den Figuren sind ausschließlich Ausführungsformen der Erfindung dargestellt, bei welchen die Rast- oder Sperrnut 10 an dem Ventilkörper 3 vorgesehen ist, während das Rast- oder Sperrelement 24 von dem Betätigungsknopf ausgebildet ist. Im Rahmen der vorliegenden Erfindung ist ebenfalls möglich, dass der Ventilkörper 3 das Rast- oder Sperrelement 24 ausbildet, während der Betätigungsknopf 8 die Rast- oder Sperrnut 10 ausbildet. Lediglich exemplarisch wird darauf hingewiesen, dass der Ventilkörper 3 gemäß Fig. 1 stirnseitig eine Sacklochbohrung besitzen könnte, so dass dann im Bereich dieser Stirnseite eine Rast- oder Sperrnase gebildet sein könnte mit der Einführschräge 16 und der Abstützfläche 14. In diesem Fall müsste der Grundkörper 18 mit einer Rast- oder Sperrnut ausgebildet sein, welche einseitig begrenzt ist durch die Abstützfläche 27. In diesem Fall könnte dann beispielsweise ein zentrales Sicherungselement 36 in die Sacklochbohrung des Ventilkörpers 3 eintreten, um den elastischen Freiheitsgrad der Rast- oder Sperrelemente zu blockieren oder zu behindern.

In Fig. 1 ist zu erkennen, dass die Rast- oder Sperrarme 25 nicht zwingend als frei auskragende Arme ausgebildet sein müssen. Vielmehr ist in dem dargestellten Längsschnitt der Rast- oder Sperrarm 25 U-förmig um das Sicherungselement 36 zurückgeführt. Möglich ist, dass die Rast-oder Sperrelemente 24 miteinander über einen Ringkörper gekoppelt sind oder dass die Rast-oder Sperrelemente 24 in Umfangsrichtung um das Sicherungselement 36 geschlossen sind.

Wie in Fig. 1 zu erkennen ist, kann der Betätigungsknopf 8 stirnseitig über einen umlaufenden Bund 58 verfügen, so dass ein Ziehen an dem Betätigungsknopf 8 ermöglicht werden kann, indem ein Daumen des Benutzers an die Stirnseite 32 angelegt wird, während der Zeige- und Mittelfinger den Bund 58 hintergreift.

Vorzugsweise sind der Grundkörper 18 und der Abdeckkörper 19 aus Kunststoff, beispielsweise in einem Spritzguss-Herstellungsverfahren, hergestellt. Der Ventilkörper 3 kann aus einem faserverstärkten Kunststoff hergestellt sein.

Bei Aufbringung einer Lösekraft 59 auf den Betätigungsknopf 8 wird zwischen den gegenüber der Betätigungsachse 4 geneigten Abstützflächen 14, 27 eine Kraftkomponente erzeugt, welche ohne Sicherungselement 36 das Rast- oder Sperrelement 24 radial nach außen elastisch verformt. Bei hinreichender Lösekraft 59 könnte es somit, beispielsweise bei eine starken manuellen Betätigung mit einem Ziehen an dem Betätigungsknopf 8, zu einem ungewollten Lösen der Rastverbindung und damit des Betätigungsknopfes 8 von dem Ventilkörper 3 kommen. Hier kann das im Rahmen der Erfindung optional zusätzlich einsetzbare Sicherungselement 36 Abhilfe schaffen - die Verformung des Rast- oder Sperrelements 24 (und damit ein Lösen desselben) kann bei eingesetztem Sicherungselement 36 nur gegen eine Verformung des Sicherungselements 36 oder bei Beseitigung desselben erfolgen. Die für eine Demontage erforderlichen Lösekräfte 59 können konstruktiv vorgegeben werden durch die Winkel der Abstützflächen 14, 27, die Tiefe des Eintritts der Rast- oder Sperrnase 26 in die Rast- oder Sperrnut 10 und/oder die Steifigkeit der eingesetzten Materialien.

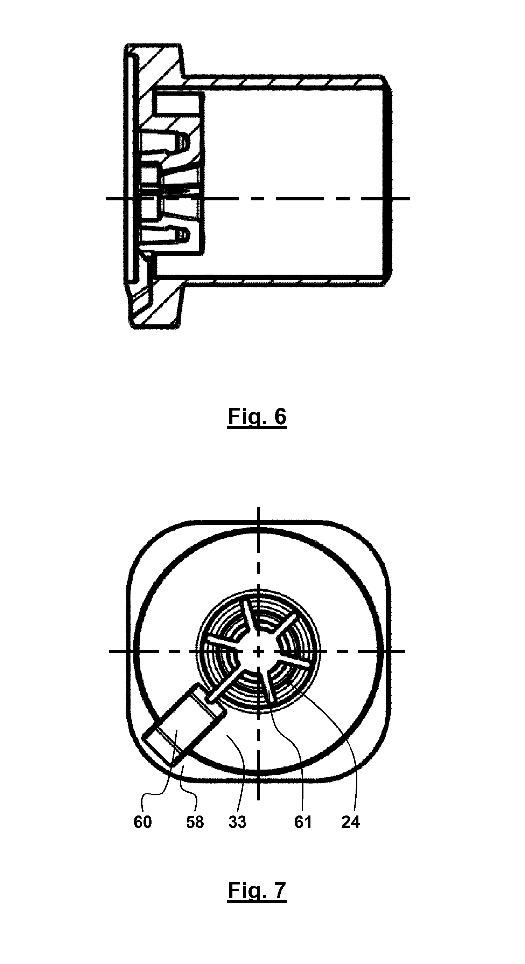

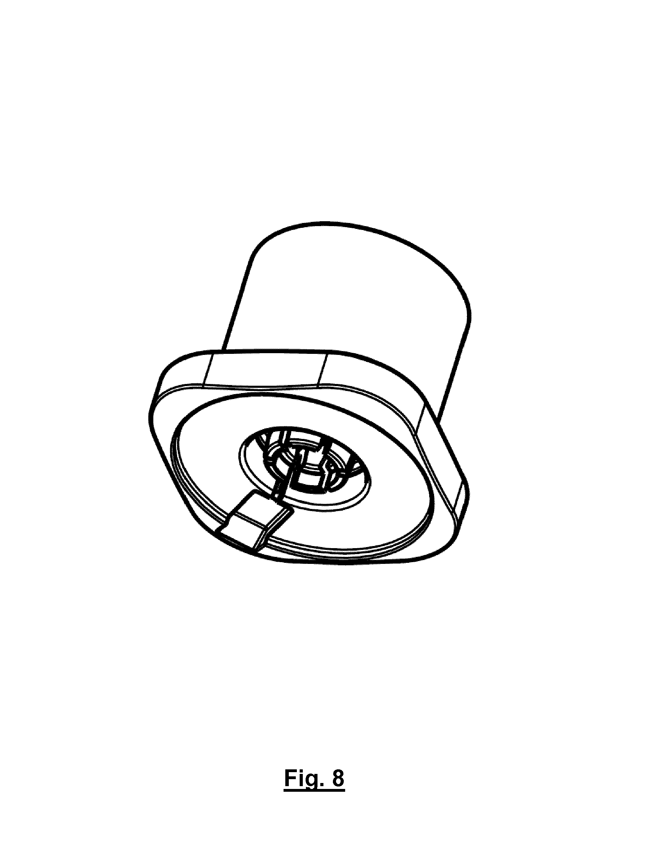

In **Fig. 7** **und** **8** ist eine Option dargestellt, wie eine vereinfachte Demontage oder ein Auswechseln des Abdeckkörpers 19 von dem Grundkörper 18 ermöglicht werden kann: Für diese Option verfügt der Grundkörper 18 stirnseitig über eine radial orientierte Nut 60, die sich sowohl im Bereich des Bundes 58 als auch im Bereich der Ausnehmung 33 erstreckt. Die Nut 60 verfügt über einen Querschnitt derart, dass es möglich ist, für in den Grundkörper 18 eingerasteten Abdeckkörper 19 einen Schlitz-Schraubendreher in die Nut 60 so weit einzuführen, dass dieser den Abdeckkörper 19 hintergreift, so dass der Abdeckkörper 19 aus dem Grundkörper 18 "herausgehebelt" werden kann.

Entsprechend einer weiteren Option erfüllt die Nut 60 einen weiteren Zweck: Gemäß Fig. 7 und 8 sind die in Umfangsrichtung verteilten Rast- oder Sperrelemente 24 in Umfangsrichtung voneinander getrennt durch jeweils einen Spalt 61. Einer dieser Spalte 61 ist radial nach außen etwas verlängert ausgebildet, so dass dieser in die Nut 60 mündet. Auch für mit dem Grundkörper 18 montierten Abdeckkörper schafft die Nut 60 und der radial nach außen verlängerte Spalt 61 eine Verbindung des hohlzylinderförmigen Innenraums 62, welcher sich zwischen Grundkörper 18, Ventilkörper 3 und Gehäuse 2 ergibt, mit der Atmosphäre, womit eine Entlüftung des Innenraums 62 erfolgen kann, um unterschiedliche Stellungen mit unterschiedlichen Volumina des Innenraums 62 zu ermöglichen.

### BEZUGSZEICHENLISTE

- 1: Ventil
- 2: Gehäuse
- 3: Ventilkörper
- 4: Längs- oder Betätigungsachse
- 5: Steuernut
- 6: Absatz
- 7: Bund
- 8: Betätigungsknopf
- 9: radiale Ausnehmung
- 10: Rast- oder Sperrnut
- 11: Querfläche
- 12: Boden
- 13: Öffnungswinkel
- 14: Abstützfläche
- 15: Öffnungswinkel
- 16: Einführschräge
- 17: Stirnfläche
- 18: Grundkörper
- 19: Abdeckkörper
- 20: Seitenschenkel
- 21: Seitenschenkel
- 22: Hülsenbereich
- 23: Grundschenkel
- 24: Rast- oder Sperrelement
- 25: Rast- oder Sperrarm
- 26: Rast- oder Sperrnase
- 27: Abstützfläche
- 28: Abstützfläche
- 29: Querfläche
- 30: Spalt
- 31: Steg
- 32: Stirnseite
- 33: Ausnehmung
- 34: Teilfläche
- 35: Ausnehmung
- 36: Sicherungselement
- 37: Rast- oder Sperrnut
- 38: Rast- oder Sperrnase
- 39: Hülse
- 40: Mantelfläche
- 41: Mantelfläche
- 42: Langnut
- 43: Gleitkontur
- 44: Führungsschlitz
- 45: Verengung
- 46: Verengung
- 47: erste Schaltstellung
- 48: Überführungsbereich
- 49: zweite Schaltstellung
- 50: Durchgangsbohrung
- 51: Führungselement
- 52: Führungsstift
- 53: Mantelfläche
- 54: Dichtelement
- 55: Spalt
- 56: Federelement
- 57: Betätigungskraftkontur
- 58: Bund
- 59: Lösekraft
- 60: Nut
- 61: Spalt
- 62: Innenraum

## Patentansprüche

1. Pneumatisches Ventil (1) mit einem Ventilkörper (3), dessen Stellung manuell über einen Betätigungsknopf (8) veränderbar ist, **dadurch gekennzeichnet, dass** der Betätigungsknopf (8) einen Grundkörper (18) besitzt, der über eine Rast- oder Sperrverbindung mit dem Ventilkörper (3) gekoppelt ist.

2. Ventil (1) nach Anspruch 1, **dadurch gekennzeichnet, dass** die Rast- oder Sperrverbindung über mindestens ein radial elastisch verformbares Rast- oder Sperrelement (24) verfügt, welches zur Bildung der Rast- oder Sperrverbindung in eine radialen Ausnehmung (9) eingreift.

3. Ventil (1) nach Anspruch 2, **dadurch gekennzeichnet, dass** das mindestens eine Rast-oder Sperrelement (24) von dem Grundkörper (18) des Betätigungselements (8) ausgebildet ist und die radiale Ausnehmung (9) von dem Ventilkörper (3) ausgebildet ist.

4. Ventil (1) nach Anspruch 2 oder 3, **dadurch gekennzeichnet, dass** ein Sicherungselement (36) vorhanden ist, welches den Freiheitsgrad für die radiale elastische Verformung des Rast- oder Sperrelements (24) blockiert.

5. Ventil (1) nach Anspruch 4, **dadurch gekennzeichnet, dass** das Sicherungselement (36) mit dem Rast- oder Sperrelement (24) oder dem Grundkörper (18) des Betätigungsknopfes (8) über eine Rast- oder Sperrverbindung verbunden ist.

6. Ventil (1) nach Anspruch 4 oder 5, **dadurch gekennzeichnet, dass** das Sicherungselement (36) zumindest eine Teilfläche (34) der Stirnseite (32) des Betätigungsknopfes (8) ausbildet.

7. Ventil (1) nach Anspruch 6, **dadurch gekennzeichnet, dass** die von dem Sicherungselement (36) gebildete Fläche oder Teilfläche (34) der Stirnseite (32) des Betätigungsknopfes (8) für einen Einsatzzweck des Ventils individualisiert ist.

8. Ventil (1) nach einem der vorhergehenden Ansprüche, **dadurch gekennzeichnet, dass** zwischen Betätigungsknopf (8) und Ventilkörper (3) eine Hülse (39) gefangen ist, welche einen Führungsschlitz (44) besitzt, in welchen ein an einem Gehäuse (2) geführtes Führungselement (51) eingreift.

9. Ventil (1) nach Anspruch 8, **dadurch gekennzeichnet, dass** der Führungsschlitz (44) mindestens eine Verengung (45, 46) besitzt.

10. Ventil (1) nach einem der vorhergehenden Ansprüche, **dadurch gekennzeichnet, dass** der Ventilkörper (3) eine Betätigungskraftkontur (57) besitzt,
a) deren Abstand von einer Längsachse (4) des Ventilkörpers (3) sich verändert und
b) an welcher ein radial elastisch beaufschlagtes Gleitelement oder Führungselement (51) während der manuellen Betätigung des Betätigungsknopfes (8) entlanggleitet.

11. Ventil (1) nach einem der Ansprüche 8 bis 10, **dadurch gekennzeichnet, dass** ein Dichtelement (54) vorhanden ist, welches
a) eine Abdichtung des Betätigungsknopfes (8) gegenüber dem Gehäuse (2) vornimmt und
b) das Gleitelement, Führungselement (51) oder ein Verdrehsicherungselement radial elastisch beaufschlagt.

12. Ventil (1) nach einem der Ansprüche 2 bis 11, **dadurch gekennzeichnet, dass** das Rast- oder Sperrelement (24) mit einem axialen Übermaß in der Ausnehmung (9) angeordnet ist.

13. Ventil (1) nach einem der vorhergehenden Ansprüche, **dadurch gekennzeichnet, dass** der Betätigungsknopf (8), der Grundkörper (3), der Abdeckkörper (19) und/oder der Ventilkörper (3) aus Kunststoff oder einem faserverstärkten Kunststoff hergestellt ist/sind.

14. Gruppe pneumatischer Ventile (1), die jeweils einen Ventilkörper (3) besitzen, dessen Stellung manuell über einen Betätigungsknopf (8) veränderbar ist, insbesondere mit Ventilen (1) nach einem der vorhergehenden Ansprüche,
wobei
a) der Betätigungsknopf (8a) von Ventilen (1a) einer ersten Teilgruppe für einen ersten Einsatzzweck individualisiert ist und
b) der Betätigungsknopf (8b) von Ventilen (1 b) einer zweiten Teilgruppe für einen zweiten Einsatzzweck individualisiert ist,
**dadurch gekennzeichnet, dass**
c) die Betätigungsknöpfe (8a, 8b) der beiden Teilgruppen jeweils mit einem Grundkörper (18) und einem Abdeckkörper (19a, 19b) ausgebildet sind, wobei
d) die Betätigungsknöpfe (8a, 8b) der beiden Teilgruppen gleiche Grundkörper (18), aber unterschiedliche, für den jeweiligen Einsatzzweck individualisierte Abdeckkörper (19a, 19b) besitzen.
